# EUROPEAN PATENT SPECIFICATION

(11) **EP 1 157 450 B1**
(45) Date of publication and mention of the grant of the patent: **29.07.2009**
(21) Application number: 00914114.4
(22) Date of filing: 02.03.2000
(51) Int. Cl.: H02B 5/00

(54) **ELECTRIC SUBSTATION**
ELEKTRISCHE UNTERSTATION
SOUS-STATION ELECTRIQUE

(30) Priority: 04.03.1999 IT MI990439
(43) Date of publication of application: 28.11.2001
(73) Proprietor: ABB S.p.A., 20124 Milano (IT)
(72) Inventor: PIAZZA, Costante, I-26900 Lodi (IT); GUERRA, Giuliano, I-15067 Novi Ligure (IT)
(74) Representative: Giavarini, Francesco
(86) International application number: PCT/EP2000/001952
(87) International publication number: WO 2000/052799

(56) References cited:
- DE-A- 2 157 102
- DE-A- 2 646 617
- DE-U- 9 417 477
- US-A- 5 796 060
- US-A- 5 841 629
- HEUCK KLAUS: 'Elektrische Energieversorgung/Klaus Heuck; Klaus-Dieter Dettmann', 1983, VIEWEG, BRAUNSCHWEIG; WIESBADEN XP007905265 * page 196 - page 201 *

## Description

The present invention relates to an electric power transmission and distribution substation for high- and/or medium-voltage applications having improved shape and characteristics.

More particularly, the present invention relates to an electric substation of the single-bar type, which differs from known type of substation in the simplicity, compactness and modularity of its constructive structure and is thus extremely flexible in applications and significantly convenient from the economic point of view.

It is known in the art that electric substations with the three-phase single-bar system, for example of the so-called "in/out" type, use a system of three conducting bars, each of which is conveniently connected to the main power line and to a power transformer. The substation is furthermore provided with a series of primary components, such as for example disconnectors, instrument transformers, et cetera, and secondary components, for example bar protections, overcurrent protections, et cetera.

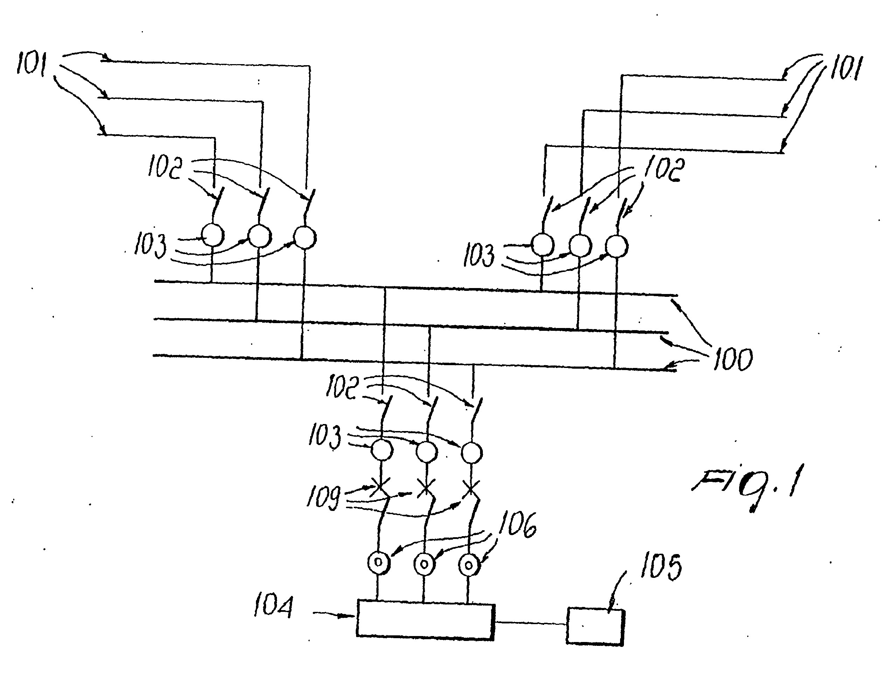

Figure 1 schematically illustrates a minimal configuration of a single-bar electric substation. As shown in said figure, each bar 100 is connected in input to a corresponding phase of the main power line 101; at least one disconnector 102 and a current transformer 103 are used along the conductor that connects one phase of the line 101 to the corresponding bar 100. In turn, the three bars 100 are electrically connected to a power transformer 104 which appropriately varies the voltage so as to obtain an adequate level thereof in input to a set of medium-voltage devices, generally designated by the reference numeral 105; ahead of the power transformer 104 there are also surge arresters 106 which protect said transformer from any damage. A second disconnector 102, a second current transformer 103 and a circuit breaker 109 are used along the connection between each bar 100 and the power transformer 104.

At the output of the substation, each bar 100 is connected to the corresponding phase of the line 101 with an architecture which is similar to the input architecture, i.e., by using another disconnector 102 and an additional current transformer 103.

Generally, in the most common applications, the minimal configuration of the electrical substation is conveniently complemented by using additional primary components: in particular, each phase of the main power line 101 uses two voltage transformers, two disconnectors and two circuit breakers which are arranged respectively at the input and output connections between the phase of the line and the bar of the substation.

The substation is furthermore provided with a series of secondary components which are constituted by protections and control systems, in order to ensure correct electrical operation of the system and avoid dangerous damage. In particular, there are overcurrent protections for each current transformer 103, distance-measurement protections suitable to check for the presence and location of any faults along the phases of the line, bar protectors for protecting the bars against any faults caused for example by overvoltages due to lightning or other events, and a synchronization system (so-called synchrocheck) for checking the synchronization of the voltages between the input and the output of the substation.

Owing to the large number of primary and secondary components required, even for providing a minimal configuration, known kinds of electrical substation with single-bar system are unsatisfactory in practical use, mainly because of their high cost, their dimensions and their need for frequent maintenance. Furthermore, said substations do not have a modular structure which would make them appropriately flexible in application and easy to implement according to the various requirements of application.

Moreover, the fact cannot be ignored that the presence of the three air-insulated bars, in addition to requiring the use of necessary and expensive bar protectors, in any case entails a decrease in the overall reliability of the substation.

Document US5841629 shows an example of a power transmission and distribution substation of the state of the art, as defined in the preamble of claim 1.

Document US5796060 shows an example of a switching apparatus of the state of the art.

The aim of the present invention is to provide an electric power transmission and distribution substation for high- and/or medium-voltage applications in which the number of primary and secondary components is reduced significantly with respect to known types of station, with a consequent economic benefit.

Within the scope of this aim, an object of the present invention is to provide an electric power transmission and distribution substation for high- and/or medium-voltage applications which has a modular structure, so as to allow high flexibility in applications and facilitate the provision of different application configurations.

Another object of the present invention is to provide an electric power transmission and distribution substation for high- and/or medium-voltage applications which has a compact and small structure, so as to significantly reduce the space requirements.

Another object of the present invention is to provide an electric power transmission and distribution substation for high- and/or medium-voltage applications which is highly reliable, relatively easy to manufacture and at competitive costs.

This aim, these objects and others which will become apparent hereinafter are achieved by an electric power transmission and distribution substation for high-and/or medium-voltage applications, according to the following claim 1.

This solution allows to obtain a simplified substation in which the number of constructive components is reduced considerably by virtue of the use of a switching apparatus which integrates the functions which, in known types of substation, are performed by multiple separate and individual elements.

Furthermore, the structure thus conceived is in practice a prefabricated and transportable module which comprises, in an optimized manner, the transformer, the surge arresters and all the high-, medium- and low-voltage devices, and is suitable, in a modular manner, to provide different substation configurations, such as for example in/out or T-type layouts, H-type layouts, H-type layouts with translation bar, loop-throughs, et cetera.

Further characteristics and advantages of the invention will become apparent from the description of preferred but not exclusive embodiments of the substation according to the invention, illustrated only by way of non-limitative example in the accompanying drawings, wherein:
Figure 1 is a schematic view of the configuration of an electric substation of the single-bar type of the known art;
Figure 2 is a schematic side view of the electric substation according to the invention;
Figure 3 is a top view of the substation of Figure 2;
Figure 4 is a view of an embodiment of a switching apparatus used in the electric substation according to the invention;
Figures 5, 6 and 9 are views of possible configurations of substations;
Figure 7 is a schematic view of a transportable substation module according to the invention;
Figure 8 is a view of the possible electrical switching operations that can be performed with the switching apparatus of Figure 4.

In the various figures, identical reference numerals designate identical or technically equivalent elements.

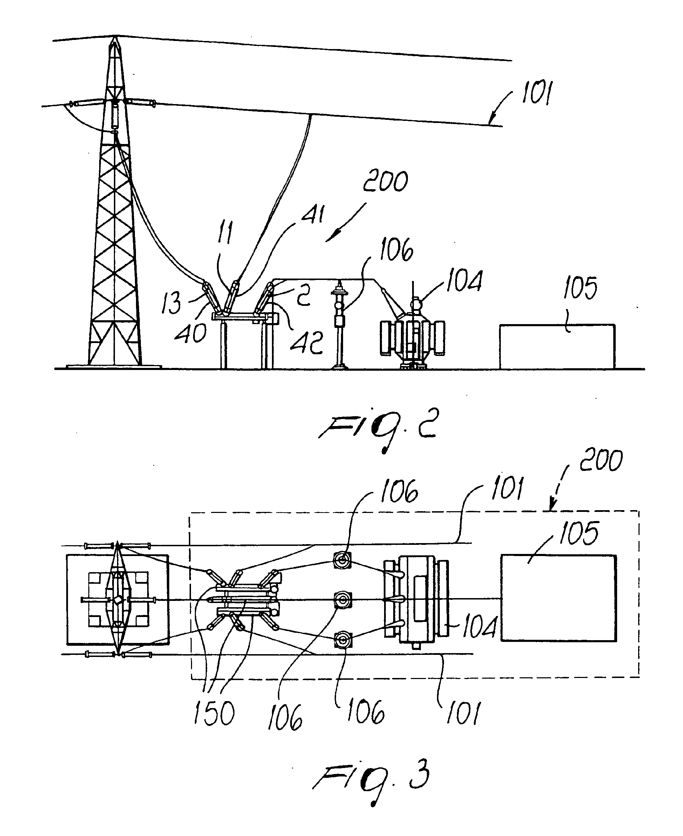

With reference to Figures 2 and 3, the electric substation according to the invention, generally designated by the reference numeral 200, comprises three switching apparatuses 150, each of which is connected to a corresponding phase of the three-phase power line 101 and to a transformer 104; said transformer 104 can be constituted, for example, by a power or distribution transformer. Ahead and after the transformer 104 there are, respectively, surge arresters 106 which are suitable to protect said transformer 104 from any overvoltage faults and a set of known medium- and low-voltage devices, generally designated by the reference numeral 105; said medium-voltage devices comprise, for example, distribution panels, while the low-voltage devices comprise known control systems and protections.

Possible embodiments of the switching apparatus 150 which can be used in the electric substation according to the invention are described in Italian patent applications no. MI98A02258 (WO-A 00/24100) and no. M198A2259 (WO-A-00/24099).

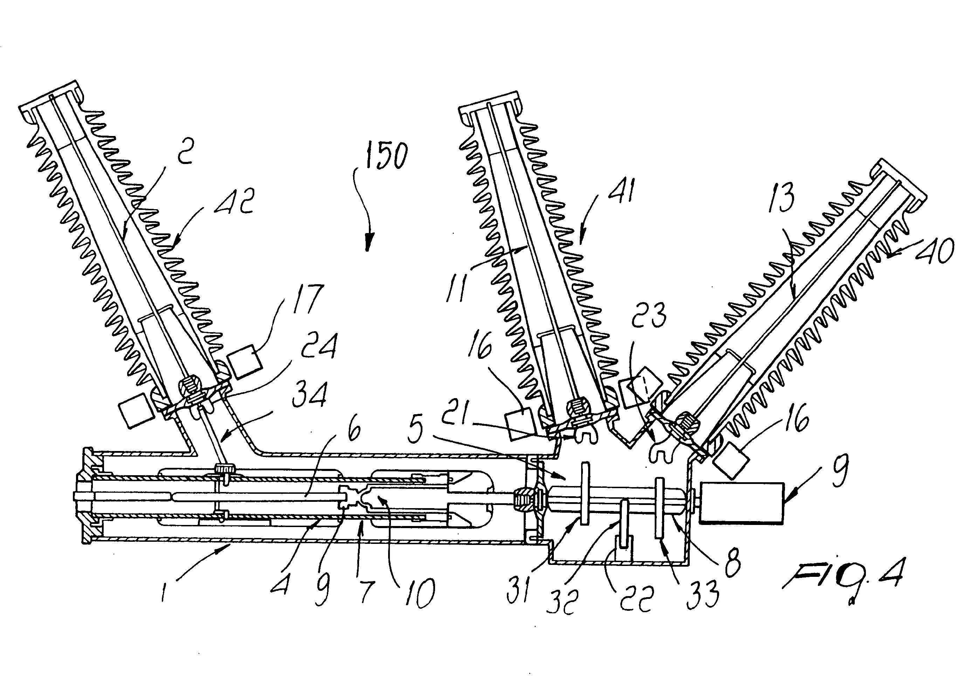

In particular, as shown in Figure 4, the device 150 comprises an enclosure 1 which has three bushings: a first bushing 40 which accommodates a first connection terminal 13, a second bushing 41 which accommodates a second connection terminal 11, and a third bushing 42 which accommodates a third connection terminal 2. For example, the first connection terminal 13 is an input terminal, and the second 11 and third 2 connection terminals are output terminals.

In particular, in the embodiment shown schematically in Figures 2 and 3 the first input terminal 13 is connected in input to the line 101, the second output terminal 11 is connected in output to the line 101 and the third output terminal 2 is connected to the transformer 104.

Inside the enclosure 1, which contains an insulating gas, there is an interruption unit 4, to which the third terminal 2 is electrically connected, and a disconnection unit 5.

The interruption unit 4 comprises an interruption chamber 7 which accommodates a fixed contact 10 and a moving contact 9 which is connected to an actuation rod 6 which is in turn connected to an actuation and control device, not shown, which allows to operate the interruption unit 4. The actuation and control device can comprise, for example, by a mechanical or hydraulic actuator or by an oleopneumatic or electric one; preferably, in the substation according to the invention, the actuation and control device comprises a rotary motor with a position sensor, for example a rotary servomotor with a position sensor. In this case, the connection between the motor and the moving contact occurs by means of a kinematic pair which is capable of converting the rotary motion of the motor shaft into a translatory motion of the moving contact.

The disconnection unit 5 comprises a first fixed contact 23 which is connected to the first input terminal 13, a second fixed contact 21 which is connected to the second output terminal 11, a third fixed contact 24 which is connected to the third output terminal 2, and a fourth fixed contact 22 which is at ground voltage. The disconnection unit 5 furthermore comprises a rotary actuation element, constituted for example, as shown in Figure 4, by a shaft 8 which is moved by actuators which are represented schematically by the unit 9; said actuators can comprise, for example, an appropriately controlled electric motor, for example a servomotor. In particular, the apparatuses 150 used in the substation according to the invention can be of the single-pole control type, in which there are actuation means on each individual phase for performing the disconnection maneuver, or can be of the three-pole actuation type, in which the energy for performing the disconnection maneuver on the three phases of the device is supplied by a single actuation means which is mechanically coupled to the disconnection units of each individual phase.

In the embodiment of Figure 4, a first moving contact 31, a second moving contact 32 and a third moving contact 33, electrically connected to the interruption unit 4, are fixed to the shaft 8 and rotate rigidly with it. Said moving contacts 31, 32, 33, constituted for example by blades which have a circular-sector profile and are keyed on the shaft 8, are arranged so that each one mates with a corresponding one of the fixed contacts, designated by the reference numerals 21, 22 and 23 respectively. Furthermore, the moving contacts 31, 32 and 33 are fixed to the shaft 8 in such a relative angular arrangement that the moving contact 32 cannot be mated with the fixed contact 22 when the moving contact 31 and/or the moving contact 33 are mated with the corresponding fixed contacts 21 and 23. The disconnection maneuver related to the line input-output occurs by turning the shaft 8; accordingly, the moving contacts 31, 32 and 33 rigidly coupled thereto mate with/disengage from the respective fixed contacts 21, 22 and 23, according to the operating requirements.

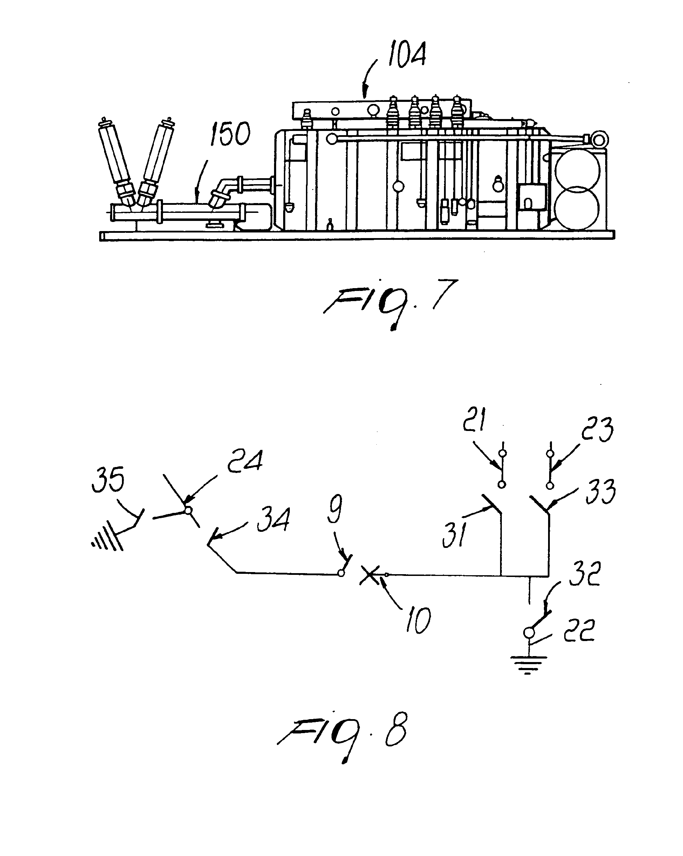

The disconnection unit 5 comprises an additional moving contact 34 which is electrically connected to the interruption unit 4 and can be coupled to said third fixed contact 24 and to a fifth fixed contact (shown only in Figure 8 and designated by the reference numeral 35) which is at ground voltage and is located proximate to said fourth moving contact. The moving contact 34, which can be for example of the piston or rack type, is preferably fixed on the enclosure of the chamber 7 and is actuated by a suitable actuation system of a known type, not shown. In this manner, by coupling-uncoupling the fourth moving contact 34 with respect to the fifth fixed contact it is possible to perform disconnection on the side where connection between the apparatus 150 and the transformer 104 occurs.

Figure 8 is a schematic view, from an electrical viewpoint, of the switching apparatus 150 used in the substation according to the invention; said figure also schematically illustrates the fifth fixed contact, designated by the reference numeral 35. Possible configurations that can be obtained by appropriately actuating the interruption unit and the disconnection unit are:
a) contacts 31, 33, 34 and 9 closed; contacts 32 and 35 open.
b) contacts 33, 34 and 9 closed; contacts 31, 32 and 35 open.
c) contacts 31, 34 and 9 closed; contacts 32, 33 and 35 open.
d) contacts 31, 33 and 35 closed; contacts 34, 32 and 9 open.

The substation thus conceived therefore allows to eliminate, in practice, air-insulated conducting bars and the associated protections, with a considerable economic benefit; furthermore, since there are no air-insulated conducting bars, the overall reliability of the electric substation is increased significantly.

Another advantage is provided by the fact that it is possible to arrange instrument transformers inside each device 150; for example, as shown schematically in Figure 4, two voltage transformers 16 are arranged respectively at the base of the first bushing 40 and at the base of the second bushing 41, and a current transformer 17 is arranged at the base of the third bushing 42. Clearly, the number of instrument transformers and their arrangement in the switching apparatus 150 can change appropriately according to the specific requirements and/or needs of the application.

In this manner, by integrating the various components inside the switching apparatuses 150 one obtains a substation which is even more compact than known types of substation and is inherently reliable, allowing to reduce the number of protections required, particularly as regards the number of overcurrent protections.

According to a particular embodiment, not shown, the actuation element of the disconnection unit 5 is constituted by the enclosure of the interruption chamber 7. In this case, the moving contacts 31, 32, 33 and 34 of the disconnection unit are keyed on the outer surface of the interruption chamber, which can rotate with respect to the enclosure 1 of the apparatus. In this case also, movement is imparted by actuators which comprise, for example, an appropriately controlled electric motor. By using this technical solution, the apparatus used in the substation according to the invention is even more compact, since the space occupied by the disconnection unit is distributed inside the enclosure 1 along the interruption chamber.

Another advantage of the substation according to the invention is the fact that by virtue of its modular structure it can be manufactured as a prefabricated unit which integrates a transformer, surge arresters, high-, medium- and low-voltage devices, which can be easily transported and assembled at the installation side; an example in this regard is shown in Figure 7, which shows a substation module which can be transported directly on a track. Furthermore, indeed because of its modularity, the substation is suitable to be easily implemented so as to obtain various configurations.

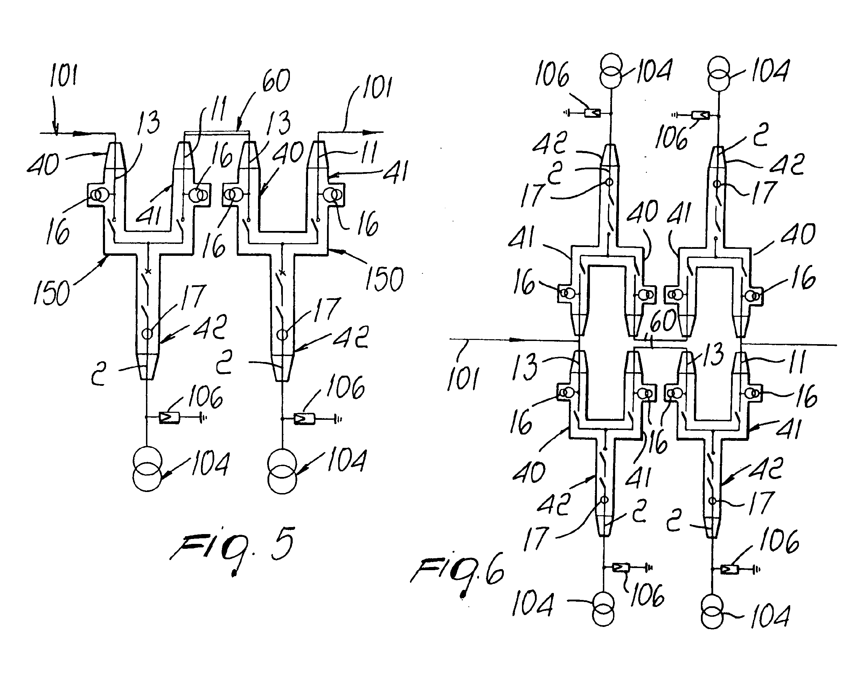

For example, as shown schematically in Figure 5, it is possible to use, for each phase of the line 101, two switching apparatuses 150; in particular, a first switching apparatus 150 has a first input terminal 13 which is connected in input to the line 101, a second output terminal 11 which is connected in output, for example through a junction conductor 60, to a first input terminal 13 of the second switching apparatus 150, and a third output terminal 2 which is connected to a first transformer 104. In turn, the second switching apparatus 150 has a second output terminal 11 which is connected in output to the power supply line and a third output terminal 2 which is connected to a second transformer 104. In an alternative embodiment, not shown, instead of the junction conductor 60 it is possible to effectively use a known type of circuit breaker.

With this solution, each one of the two apparatuses 150 is therefore connected to a corresponding transformer 104, allowing to obtain a substation configuration in which two separate users are supplied.

It is possible to further implement, in a very simple way, the above described substation configuration by using four transformers 104 and four corresponding switching apparatuses 150 for each phase of the line, as shown in Figure 6; in this case, the switching apparatuses are mutually connected in pairs, as described for the substation of Figure 5.

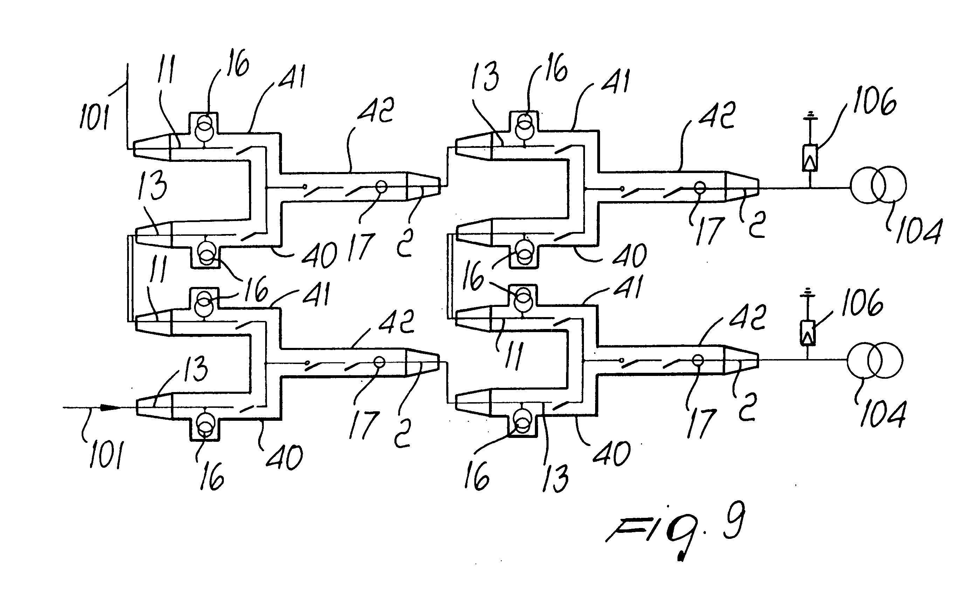

Another example of a possible configuration of a substation is shown schematically in Figure 9. In this case, four switching apparatuses 150 are used for each phase of the line 101: in particular, a first switching apparatus 150 has a first input terminal 13 which is connected in input to the line 101, a second output terminal 11 which is connected to a first input terminal 13 of a second switching apparatus 150, and a third output terminal 2 which is connected to a first input terminal 13 of a third switching apparatus 150. In turn, the second switching apparatus 150 has a second output terminal 11 which is connected in output to the power supply line and a third output terminal 2 which is connected to a first input terminal 13 of a fourth switching apparatus 150. The third switching apparatus 150 has a second output terminal 11 which is connected to a corresponding second terminal 11 of the fourth switching apparatus 150. Finally, said third and fourth switching apparatuses both comprise a third output terminal 2, each one of said terminals being connected to a corresponding transformer 104.

By composing functional apparatuses for two-bar systems with single-bar systems, such as for example switching apparatuses having two bushings which accommodate two corresponding connection terminals, it is possible to obtain additional substation layouts.

The substation thus conceived is susceptible of numerous modifications and variations, all of which are within the scope of the inventive concept; all the details may furthermore be replaced with other technically equivalent elements.

In practice, the materials used, as well as the dimensions, may be any according to the requirements and the state of the art.

## Claims

1. An electric power transmission and distribution substation (200) for high- and/or medium-voltage applications, suitable to be connected to a three-phase power supply line (101) and comprising at least one transformer (104), said substation comprising, for each phase of the power supply line (101), at least one gas-insulated switching apparatus (150) comprising an enclosure (1), which has a first bushing (40) which accommodates a first connection terminal (13), a second bushing (41) which accommodates a second connection terminal (11), and a third bushing (42) which accommodates a third connection terminal (2), said enclosure (1) containing an interruption unit (4), which has a fixed contact (10) and a moving contact (9), and a disconnection unit (5), which comprises a first fixed contact (23), a second fixed contact (21) and a third fixed contact (24), which are respectively connected to said first terminal (13), to said second terminal (11) and to said third terminal (2), and a first moving contact (33), a second moving contact (31) and a third moving contact (34), which can be coupled to the corresponding fixed contacts and electrically connected to the interruption unit (4), **characterized in that** said disconnection unit (5) comprises a rotating actuation element (8) to which said first and second moving contacts (33, 31) are rigidly fixed, and **in that** said first and second fixed contacts (23, 21) lie respectively on the rotation planes of said first and second moving contacts (33, 31).

2. The substation according to claim 1, **characterized in that** said first connection terminal (13) is an input terminal, and said second connection terminal (11) and said third connection terminal (2) are output terminals.

3. The substation according to claim 1, **characterized in that** the rotating actuation element (8) is actuated by an electric motor (9).

4. The substation according to claim 1, **characterized in that** said disconnection unit (5) comprises a fourth moving contact (32) which is rigidly fixed to said rotating actuation element (8) and a corresponding fourth fixed contact (22) at ground voltage which lies on the plane of rotation of said fourth moving contact (32), and a fifth fixed contact (35), which is at ground voltage and can be coupled to said third moving contact (34).

5. The substation according to claim 1, **characterized in that** it comprises at least one voltage transformer (16) and at least one current transformer (17) which are arranged inside said switching apparatus (150).

6. The substation according to claim 2, **characterized in that** the first input terminal (13) is connected in input to the power supply line (101), the second output terminal (11) is connected in output to the power supply line (101), and the third output terminal (2) is connected to the transformer (104).

7. The substation according to claim 1, **characterized in that** it comprises, for each phase of the power supply line (101), a first switching apparatus (150) and a second switching apparatus (150), said first switching apparatus (150) having a first input terminal (13) which is connected in input to the power supply line (101), a second output terminal (11) which is connected to a first input terminal (13) of the second switching apparatus (150), a third output terminal (2) which is connected to a first transformer (104), said second switching apparatus (150) having a second output terminal (11) which is connected in output to the power supply line (101) and a third output terminal (2) which is connected to a second transformer (104).

8. The substation according to claim 1, **characterized in that** it comprises, for each phase of the power supply line (101), four switching apparatuses (150), of which:
-- a first switching apparatus (150) in which a first input terminal (13) is connected in input to the power supply line (101), a second output terminal (11) is connected to a first terminal (13) of a second switching apparatus (150), and a third output terminal (2) is connected to a first transformer (104), said second switching apparatus (150) having a second output terminal (11) which is connected in output to the power supply line (101) and a third output terminal (2) which is connected to a second transformer (104);
-- a third switching apparatus (150) in which a first input terminal (13) is connected in input to the power supply line (101), a second output terminal (11) is connected in output to a first terminal (13) of a fourth switching apparatus (150), and a third output terminal (2) is connected to a third transformer (104), said fourth switching apparatus (150) having a second output terminal (11) which is connected in output to the power supply line (101) and a third output terminal (2) which is connected to a fourth transformer (104).

9. The substation according to claim 1, **characterized in that** it comprises, for each phase of the power supply line (101), four switching apparatuses (150), of which:
-- a first switching apparatus (150), in which a first input terminal (13) is connected in input to the power supply line (101), a second output terminal (11) is connected to a first input terminal (13) of a second switching apparatus (150), and a third output terminal (2) is connected to a first input terminal (13) of a third switching apparatus (150), the second switching apparatus (150) having a second output terminal (11) which is connected in output to the power supply line (101) and a third output terminal (2) which is connected to a first input terminal (13) of a fourth switching apparatus (150), said third and fourth switching apparatuses (150) each having a second terminal (11) for mutual connection and a third output terminal (2) which is connected to a corresponding transformer (104).

## Patentansprüche

1. Elektrische Leistungsübertragungs- und -verteilungs-Unterstation (200) für Hoch-und/oder Mittelspannungs-Anwendungen, die zum Verbinden mit einer Dreiphasen-Leistungszuführleitung (101) geeignet ist und zumindest einen Transformator (104) aufweist, wobei die Unterstation für jede Phase der Leistungszuführleitung (101) zumindest eine gasisolierte Schaltvorrichtung (150) aufweist, die ein Gehäuse (1) aufweist, das eine erste Durchführung (40), in der ein erster Verbindungsanschluss (13) untergebracht ist, eine zweite Durchführung (41), in der ein zweiter Verbindungsanschluss (11) untergebracht ist, und eine dritte Durchführung (42) aufweist, in der ein dritter Verbindungsanschluss (2) untergebracht ist, wobei das Gehäuse (1) eine Unterbrechungseinheit (4), die einen festen Kontakt (10) und einen beweglichen Kontakt (9) aufweist, und eine Trennungseinheit (5) enthält, die einen ersten festen Kontakt (23), einen zweiten festen Kontakt (21) und einen dritten festen Kontakt (24), die jeweils mit dem ersten Anschluss (13), mit dem zweiten Anschluss (11) und dem dritten Anschluss (2) verbunden sind, und einen ersten beweglichen Kontakt (33), einen zweiten beweglichen Kontakt (31) und einen dritten beweglichen Kontakt (34) aufweist, die mit den entsprechenden festen Kontakten gekoppelt und mit der Unterbrechungseinheit (4) elektrisch verbunden werden können, **dadurch gekennzeichnet, dass** die Unterbrechungseinheit (5) ein Drehbetätigungselement (8) aufweist, an dem der erste und der zweite bewegliche Kontakt (33, 31) starr befestigt sind, und **dadurch**, dass der erste und der zweite feste Kontakt (23, 21) jeweils auf den Drehebenen des ersten und des zweiten beweglichen Kontakts (33, 31) liegen.

2. Unterstation nach Anspruch 1, **dadurch gekennzeichnet, dass** der erste Verbindungsanschluss (13) ein Eingangsanschluss ist, und der zweite Verbindungsanschluss (11) und der dritte Verbindungsanschluss (2) Ausgangsanschlüsse sind.

3. Unterstation nach Anspruch 1, **dadurch gekennzeichnet, dass** das Drehbetätigungselement (8) durch einen Elektromotor (9) betätigt wird.

4. Unterstation nach Anspruch 1, **dadurch gekennzeichnet, dass** die Trennungseinheit (5) einen vierten beweglichen Kontakt (32), der starr an dem Drehbetätigungselement (8) befestigt ist, und einen korrespondierenden vierten festen Kontakt (22) auf Massespannung, der auf der Drehebene des vierten beweglichen Kontakts (32) liegt, und einen fünften festen Kontakt (35) aufweist, der sich auf Massespannung befindet und mit dem dritten beweglichen Kontakt (34) gekoppelt werden kann.

5. Unterstation nach Anspruch 1, **dadurch gekennzeichnet, dass** sie zumindest einen Spannungswandler (16) und zumindest einen Stromwandler (17) aufweist, die im Inneren der Schaltvorrichtung (150) angeordnet sind.

6. Unterstation nach Anspruch 2, **dadurch gekennzeichnet, dass** der erste Eingangsanschluss (13) am Eingang mit der Leistungszuführleitung (101) verbunden ist, der zweite Ausgangsanschluss (11) am Ausgang mit der Leistungszuführleitung (101) verbunden ist und der dritte Ausgangsanschluss (2) mit dem Transformator (104) verbunden ist.

7. Unterstation nach Anspruch 1, **dadurch gekennzeichnet, dass** sie für eine jede Phase der Leistungszuführleitung (101) eine erste Schaltvorrichtung (150) und eine zweite Schaltvorrichtung (150) aufweist, wobei die erste Schaltvorrichtung (150) einen ersten Eingangsanschluss (13) aufweist, der am Eingang mit der Leistungszuführleitung (101) verbunden ist, einen zweiten Ausgangsanschluss (11), der mit einem ersten Eingangsanschluss (13) der zweiten Schaltvorrichtung (150) verbunden ist, einen dritten Ausgangsanschluss (2), der mit dem ersten Transformator (104) verbunden ist, wobei die zweite Schaltvorrichtung (150) einen zweiten Ausgangsanschluss (11), der am Ausgang mit der Leistungszuführleitung (101) verbunden ist, und einen dritten Ausgangsanschluss (2) aufweist, der mit einem zweiten Transformator (104) verbunden ist.

8. Unterstation nach Anspruch 1, **dadurch gekennzeichnet**, das sie für jede Phase der Leistungszuführleitung (101) vier Schaltvorrichtungen (150) aufweist, umfassend:
- eine erste Schaltvorrichtung (150), in der ein erster Eingangsanschluss (13) mit dem Eingang der Leistungszuführleitung (101) verbunden ist, ein zweiter Ausgangsanschluss (11) mit einem ersten Anschluss (13) einer zweiten Schaltvorrichtung (150) verbunden ist, und ein dritter Ausgangsanschluss (2) mit einem ersten Transformator (104) verbunden ist, wobei die zweite Schaltvorrichtung (150) einen zweiten Ausgangsanschluss (11), der am Ausgang mit der Leistungszuführleitung (101) verbunden ist, und einen dritten Ausgangsanschluss (2) aufweist, der mit einem zweiten Transformator (104) verbunden ist;
- eine dritte Schaltvorrichtung (150), in der ein erster Eingangsanschluss (13) am Eingang mit der Leistungszuführleitung (101) verbunden ist, ein zweiter Ausgangsanschluss (11) mit dem Ausgang eines ersten Anschlusses (13) einer vierten Schaltvorrichtung (150) verbunden ist und ein dritter Ausgangsanschluss (2) mit einem dritten Transformator (104) verbunden ist, wobei die vierte Schaltvorrichtung (150) einen zweiten Ausgangsanschluss (11), der am Ausgang mit der Leistungszuführleitung (101) verbunden ist, und einen dritten Ausgangsanschluss (2) aufweist, der mit einem vierten Transformator (104) verbunden ist.

9. Unterstation nach Anspruch 1, **dadurch gekennzeichnet, dass** sie für jede Phase der Leistungszuführleitung (101) vier Schaltvorrichtungen (150) aufweist, umfassend:
- eine erste Schaltvorrichtung (150), in der ein erster Eingangsanschluss (13) am Eingang mit der Leistungszuführleitung (101) verbunden ist, ein zweiter Ausgangsanschluss (11) mit einem ersten Eingangsanschluss (13) einer zweiten Schaltvorrichtung (150) verbunden ist und ein dritter Ausgangsanschluss (2) mit einem ersten Eingangsanschluss (13) einer dritten Schaltvorrichtung (150) verbunden ist, wobei die zweite Schaltvorrichtung (150) einen zweiten Ausgangsanschluss (11), der am Ausgang mit der Leistungszuführleitung (10) verbunden ist, und einen dritten Ausgangsanschluss (2) aufweist, der mit einem ersten Eingangsanschluss (13) einer vierten Schaltvorrichtung (150) verbunden ist, wobei die dritte und vierte Schaltvorrichtung (150) jeweils einen zweiten Anschluss (11) zum gegenseitigen Verbinden und einen dritten Ausgangsanschluss (2) aufweisen, der mit einem entsprechenden Transformator (104) verbunden ist.

## Revendications

1. Un poste électrique de transmission et de distribution d'énergie électrique (200) pour des applications de haute et/ou moyenne tension, adapté à être connectée à une ligne d'alimentation électrique triphasée (101) et comprenant au moins un transformateur (104), ledit poste électrique comprenant, pour chaque phase de la ligne d'alimentation électrique (101), au moins un appareil de commutation isolé par gaz (150) comprenant une enceinte (1), qui comporte une première douille (40) qui loge une première borne de connexion (13), une deuxième douille (41) qui loge une deuxième borne de connexion (11), et une troisième douille (42) qui loge une troisième borne de connexion (2), ladite enceinte (1) contenant une unité d'interruption (4), qui comporte un contact fixe (10) et un contact mobile (9), et une unité de déconnexion (5), qui comprend un premier contact fixe (23), un deuxième contact fixe (21) et un troisième contact fixe (24), qui sont respectivement connectés à ladite première borne (13), à ladite deuxième borne (11) et à ladite troisième borne (2), et un premier contact mobile (33), un deuxième contact mobile (31) et un troisième contact mobile (34), qui peuvent être couplés aux contacts fixes correspondants et connectés électriquement à l'unité d'interruption (4), **caractérisé en ce que** ladite unité de déconnexion (5) comprend un élément d'actionnement rotatif (8) auquel lesdits premier et second contacts mobiles (33, 31) sont fixés de façon rigide, et **en ce que** lesdits premier et second contacts fixes (23, 21) se situent respectivement sur les plans de rotation desdits premier et second contacts mobiles (33, 31).

2. Le poste électrique selon la revendication 1, **caractérisé en ce que** ladite première borne de connexion (13) est une borne d'entrée, et ladite deuxième borne de connexion (11) et ladite troisième borne de connexion (2) sont des bornes de sortie.

3. Le poste électrique selon la revendication 1, **caractérisé en ce que** l'élément d'actionnement rotatif (8) est actionné par un moteur électrique (9).

4. Le poste électrique selon la revendication 1, **caractérisé en ce que** ladite unité de déconnexion (5) comprend un quatrième contact mobile (32) qui est fixé de façon rigide audit élément d'actionnement rotatif (8) et un quatrième contact fixe (22) correspondant à la tension de la masse qui est situé sur le plan de rotation dudit quatrième contact mobile (32), et un cinquième contact fixe (35), qui est à la tension de la masse et peut être couplé audit troisième contact mobile (34).

5. Le poste électrique selon la revendication 1, **caractérisée en ce qu'**elle comprend au moins un transformateur de tension (16) et au moins un transformateur de courant (17) qui sont agencés à l'intérieur dudit appareil de commutation (150).

6. Le poste électrique selon la revendication 2, **caractérisé en ce** la première borne d'entrée (13) est connectée en entrée à la ligne d'alimentation électrique (101), la deuxième borne de sortie (11) est connectée en sortie à la ligne d'alimentation électrique (101) et la troisième borne de sortie (2) est connectée au transformateur (104).

7. Le poste électrique selon la revendication 1, **caractérisé en ce qu'**il comprend, pour chaque phase de la ligne d'alimentation électrique (101), un premier appareil de commutation (150) et un second appareil de commutation (150), ledit premier appareil de commutation (150) comportant une première borne d'entrée (13) qui est connectée en entrée à la ligne d'alimentation électrique (101), une deuxième borne de sortie (11) qui est connectée à la première borne d'entrée (13) du second appareil de commutation (150), une troisième borne de sortie (2) qui est connectée à un premier transformateur (104), ledit second appareil de commutation (150) comportant une deuxième borne de sortie (11) qui est connectée en sortie à la ligne d'alimentation électrique (101) et une troisième borne de sortie (2) qui est connectée à un deuxième transformateur (104).

8. Le poste électrique selon la revendication 1, **caractérisé en ce qu'**il comprend, pour chaque phase de la ligne d'alimentation électrique (101), quatre appareils de commutation (150), dont :
- un premier appareil de commutation (150) dans lequel une première borne d'entrée (13) est connectée en entrée à la ligne d'alimentation électrique (101), une deuxième borne de sortie (11) est connectée en sortie à une première borne (13) d'un deuxième appareil de commutation (150), et une troisième borne de sortie (2) est connectée à un premier transformateur (104), ledit deuxième appareil de commutation (150) comportant une deuxième borne de sortie (11) qui est connectée en sortie à la ligne d'alimentation électrique (101) et une troisième borne de sortie (2) qui est connectée à un deuxième transformateur (104) ;
- un troisième appareil de commutation (150) dans lequel une première borne d'entrée (13) est connectée en entrée à la ligne d'alimentation électrique (101), une deuxième borne de sortie (11) est connectée à une première borne (13) d'un quatrième appareil de commutation (150), et une troisième borne de sortie (2) est connectée à un troisième transformateur (104), ledit quatrième appareil de commutation (150) comportant une deuxième borne de sortie (11) qui est connectée en sortie à la ligne d'alimentation électrique (101) et une troisième borne de sortie (2) qui est connectée à un quatrième transformateur (104).

9. Le poste électrique selon la revendication 1, **caractérisé en ce qu'**il comprend, pour chaque phase de la ligne d'alimentation électrique (101), quatre appareils de commutation (150), dont :
- un premier appareil de commutation (150) dans lequel une première borne d'entrée (13) est connectée en entrée à la ligne d'alimentation électrique (101), une deuxième borne de sortie (11) est connectée à une première borne d'entrée (13) d'un deuxième appareil de commutation (150), et une troisième borne de sortie (2) est connectée à une première borne d'entrée (13) d'un troisième appareil de commutation (150), le deuxième appareil de commutation (150) comportant une deuxième borne de sortie (11) qui est connectée en sortie à la ligne d'alimentation électrique (101) et une troisième borne de sortie (2) qui est connectée à une première borne d'entrée (13) d'un quatrième appareil de commutation (150), lesdits troisième et quatrième appareils de commutation (150) comportant chacun une deuxième borne (11) pour une connexion mutuelle et une troisième borne de sortie (2) qui est connectée à un transformateur (104) correspondant.
